# EUROPEAN PATENT SPECIFICATION

(11) **EP 1 064 654 B1**
(45) Date of publication and mention of the grant of the patent: **24.05.2006**
(21) Application number: 99909465.9
(22) Date of filing: 19.03.1999
(51) Int. Cl.: G21C 9/06, G21C 19/317

(54) **A DEVICE FOR EXTRACTION OF GAS IN A NUCLEAR POWER PLANT**
VORRICHTUNG ZUR EXTRAKTION VON GAS IN EINEM KERNKRAFTWERK
DISPOSITIF POUR L'EXTRACTION DE GAZ DANS UNE CENTRALE NUCLEAIRE

(30) Priority: 23.03.1998 SE 9801004
(43) Date of publication of application: 03.01.2001
(73) Proprietor: Westinghouse Electric Sweden AB, 721 83 Västeras (SE)
(72) Inventor: STAHL, Gunnar, S-730 40 Kolbäck (SE); KORNFELDT, Anna, S-724 62 Västeras (SE); MELDER, Göran, S-572 34 Oskarshamn (SE)
(74) Representative: Berglund, Stefan
(86) International application number: PCT/SE1999/000432
(87) International publication number: WO 1999/049473

(56) References cited:
- FR-A1- 2 751 116
- US-A- 3 417 009
- US-A- 4 494 965
- US-A- 5 149 420
- US-A- 5 592 521

## Description

### TECHNICAL FIELD

The present invention relates to a nuclear plant for extraction of gas according to the preamble of claim 1, see FR-A-2751116. The power plant comprises a system of conduits to which are connected a plurality of parts such as valves, vessels and pilot control lines. A coolant is adapted to flow through the conduit system. The conduit system and parts connected thereto comprise spaces where, under certain conditions, gas may accumulate.

### BACKGROUND ART

A conventional nuclear power plant comprises a reactor vessel and a plurality of fuel assemblies, arranged therein, containing nuclear fuel. During reactor operation, nuclear fission occurs in the fuel. During the nuclear fission, heat is formed which is transported by means of a coolant, such as steam or water or steam/water mixtures, possibly via a steam generator, to a turbine connected to a generator for generating electricity. In the nuclear power plant, a conduit system, comprising a plurality of tubular conduits, is arranged for transporting the coolant. A number of so-called pilot control lines are connected to the tubular conduits for guiding the coolant via, for example, valves for various purposes. Different types of vessels are also connected to the conduit system, for example a level measurement vessel, a reactor vessel and a containment. The tubular conduits and the pilot control lines also comprise pipe bends. In the tubular conduits, the pilot control lines, in the pipe bends and in and at the valves, respectively, as well as in and at the vessels, there is a risk that non-condensable gases containing, among other things, hydrogen gas and oxygen gas, H₂ and O₂, may accumulate in certain spaces and that such contents of 2H₂+O₂ are attained that deflagration or detonation may occur. These spaces will be referred to hereinafter as gas accumulation spaces.

The non-condensable gases are formed during reactor operation, among other things because of decomposition of water. The non-condensable gases are transported out of the reactor with the aid of the coolant. In those cases where a substantially stationary coolant in the form of steam in a gas accumulation space occurs, the steam condenses because of heat emission to the surroundings, whereby the temperature thereof is reduced. During condensation of the steam, oxygen gas and hydrogen gas accumulate in the gas accumulation space. By runoff of condensate from the gas accumulation space to a lower point in the conduit system, more steam is supplied which condenses, whereby oxygen gas and hydrogen gas are enriched in the gas accumulation space.

A tubular conduit which is particularly exposed in the nuclear power plant is adapted to relieve the reactor vessel of pressure in case of, for example, a disturbance of the turbine or when it is desired to perform a reactor trip. To this end, valves are mounted, possibly via pilot control lines, to this conduit. The pilot control lines may be relatively long, for example of the order of size of 2-6 metres. When the gas accumulation space occurs in a pilot control line, because of closed valves and hence stationary coolant, this space may thus be relatively elongated.

In those cases where the hydrogen gas and the oxygen gas are ignited and hence achieve deflagration or detonation, damage may occur. The damage may lead to deformations of the gas accumulation space such that internal or external leakage occurs. For example, leakage may occur in a control valve for a so-called safety valve in the conduit system of the nuclear power plant. A detonation which brings about damage to such a valve may, at worst, jeopardize the safety of the nuclear reactor plant. Another example of damage which jeopardizes the safety of the reactor is if a level measurement vessel is damaged. This may entail an incorrect indication of the level in the level measurement vessel and hence loss or failing supply of coolant.

For the purpose of preventing too high concentrations of 2H₂+O_{2'} that is detonating gas, and detonations caused thereby, it is known to arrange different types of recombining devices associated with the gas accumulation spaces.

US 5,592,521 describes a recombining device in a nuclear power station. The recombining device comprises a first channel, which in itself comprises a plurality of channels, and a second channel. A first sub-flow passes through the first channel and a second sub-flow passes through the second channel. The walls of the first channel are provided with a catalytic coating. Heat from the catalytic reaction in the first channel is passed to the second channel, whereby the gas in the second channel is heated to facilitate a recombination of the hydrogen gas with the oxygen gas. The second channel comprises at least one ignition element, which is also heated by the heat from the first channel.

The disadvantage of the use of different types of recombining devices is that these require a relatively high temperature, above 700°C, to function efficiently. In a nuclear power plant where such recombining devices are to be used, a temperature prevails which is in the order of magnitude of 20-500°C but substantially 100-300°C. The temperature at the gas accumulation spaces is therefore considerably lower than the temperature which is required for the recombining device to function. To attain a sufficiently high temperature, the ignition elements are usually heated continuously in some way, for example electrically. Electrical heating implies that the electricity supply must be ensured for the recombining device to function satisfactorily.

Another disadvantage with known recombining devices is that a coating is formed on the walls of the recombining device during operation. The coating may, for example, consist of oxides formed because of reaction heat. The walls of the recombining device may also be coated with oxides of various kinds which are formed at other places in the conduit system and are transported to the recombining device with the coolant. Even small amounts of coatings result in a reduction of the recombination capacity of the recombining device. The reason for this is that the active surface of the recombining device is reduced at the same rate as the coating increases. Further, recombining devices need some form of ignition devices to achieve ignition of the detonating gas. These ignition devices are sensitive to pollutants since they are based on a surface reaction being created.

SE 464 487 shows a device at valves or conduits for liquid or steam transport in which there is a risk of detonating gas being formed. The device comprises a body of recombining material for recombining detonating gas arising. The recombining body consists of a spiral or a net or a plate with catalytic effect.

In the chemical and petrochemical industries, it is also known to clean gases and to produce clean hydrogen gas by extraction of hydrogen gas, respectively, with the aid of various kinds of membranes.

US 5,149,420 describes a method for plating a metal with palladium. The metal consists, for example, of niobium, vanadium, zirconium or tantalum in pure form or alloys containing one or more of these substances. The palladium-plated metal is useful for extraction of hydrogen gas in at least the interval 185-400°C.

US 5,215,729 describes a tubular membrane for purifying hydrogen or, alternatively, extracting hydrogen from a hydrogen mixture. The tubular membrane comprises a metallic part which is coated on one side or on both sides with palladium, a palladium alloy or platinum. FR-A-2 751 116 discloses a nuclear plant comprising a containment made of concrete and adapted to contain a reactor vessel and steam generators. The reactor is a Pressurised Water Reactor, PWR. In the containment, there is also a primary circuit for the coolant flowing through the reactor and the steam generators. The purpose of the technique disclosed is to provide means to take care of hydrogen gas after an accident, and more precisely after a break in a primary circuit conduit. Consequently, FR-A-2 751 116 teaches to take care of a fluid, which can contain hydrogen when the coolant after an accident is escaping from.the primary circuit into the inner space of the containment. The fluid is then conveyed out of the containment into an arrangement including a filtering device. The arrangement with filtering device is thus provided as a separate unit outside the containment.

### SUMMARY OF THE INVENTION

The present invention relates to a plant as initially defined which is characterized by the features in the characterizing portion of claim 1 and which has a device in a conduit system, or parts connected thereto. More specifically, the device is intended for extraction of non-condensable gases from a substantially stationary gas mixture in a gas accumulation space of the type described under the background art. The non-condensable gases contain, for example, hydrogen gas and oxygen gas and may, for example, be continuously released from a coolant flow which, for example, contains water and/or steam.

The device according to the invention comprises a filtering member which, for example, consists of a disc-shaped membrane. The membrane may, for example, be achieved according to the method described in US 5,149,420. However, the invention is by no means limited to the use of the membrane described in US 5,149,420.

The filtering member is arranged in the conduit system or in parts connected thereto and, at the gas accumulation space, with a first side of the member facing inwards towards the space. At the first side, a first partial pressure prevails in the gas/gases which is/are to be extracted from the accumulated gas mixture. Further, the filtering member is arranged with a second side facing outwards towards the surroundings of the conduit system and the parts connected thereto, respectively. The surroundings constitute a large and ventilated volume where a high partial pressure of the gases concerned is not allowed to build up. At this second side, a second partial pressure is adapted to prevail, which is lower than the first partial pressure. With the aid of the difference between the first and the second partial pressure, the main part of the non-condensable gases is extracted from the gas mixture accumulated in the gas accumulation space by passing out via the filtering member.

In an alternative embodiment, the filtering member comprises one or more tubular members, for example of the type mentioned in US 5,215,729. The tubular member is thereby adapted to extend towards or into the substantially stationary gas mixture in the gas accumulation space. The tubular member exhibits a relatively large liquid-permeable surface in comparison with the space required by it. The invention is by no means limited to the use of the tubular member described in US 5,215,729.

The advantage of the present invention is that the device comprising the filtering member has the ability to continuously extract the non-condensable gases from the substantially stationary gas mixture. Only the difference in partial pressure which is inherent in the nuclear power plant is needed to achieve the extraction through the filtering member.

Another advantage is that the reliability is high in the device according to the invention in comparison with the reliability of known recombining devices in a corresponding application. The device according to the invention is less sensitive to pollutants than conventional recombining device since no catalytic reaction is needed. In addition, it is possible to protect the filtering member by means of a protective part such that the coating of pollutants is reduced. Furthermore, it is an advantage that the device extracts non-condensable gases, including hydrogen gas, efficiently at a relatively low temperature interval, compared with the temperature interval of conventional recombining devices, which comprises at least the temperature interval 185-400°C. In addition, no continuous heating of the device is required, according to the invention, for achieving extraction of non-condensable gases. However, it may be desirable to heat the device according to the invention when extracting gas at temperature levels in the interval of 20-150°C for the purpose of increasing the extraction speed.

### BRIEF DESCRIPTION OF THE DRAWINGS

The invention will now be explained in greater detail with reference to the accompanying drawings.
Figure 1 schematically shows a nuclear power plant of boiling-water type, comprising a conduit system and parts connected thereto.
Figure 2 schematically shows a nuclear power plant of pressurized-water type, comprising a conduit system and parts connected thereto.
Figure 3 shows a schematic example of a valve in which devices according to the invention are arranged.
Figure 4a shows a view from above of a device according to the invention.
Figure 4b shows, in a section A-A in Figure 4a, a first embodiment of the invention comprising a filtering member designed as a disc-shaped membrane.
Figure 5 shows, in a section A-A in Figure 4a, a second embodiment of the invention comprising a filtering member designed as a disc-shaped membrane.
Figure 6 shows, in a section A-A in Figure 4a, a third embodiment of the invention comprising a filtering member designed as a plurality of tubular membranes.
Figure 7a shows, in a view from the side, a fourth embodiment of the invention.
Figure 7b shows, in a section B-B in Figure 7a, an embodiment of the invention in which a filtering member is designed as an annular membrane.

### DESCRIPTION OF THE PREFERRED EMBODIMENTS

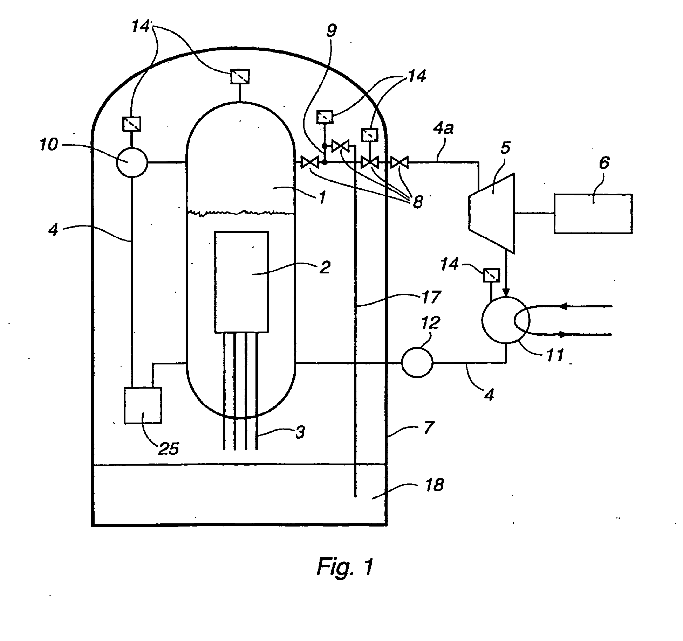

Figure 1 shows a nuclear power plant of boiling-water type. The nuclear power plant comprises a reactor vessel 1 in which is arranged a core 2 of fuel elements containing nuclear fuel. A number of control rods 3 are arranged insertable from below into the core 2 for controlling the nuclear fission. A coolant is adapted to flow into the reactor vessel 1 to carry away the heat formed as a result of the nuclear fission. In this nuclear power plant, steam is thus produced by boiling of the coolant. The temperature of the steam lies around 286°C. The steam is passed via a tubular conduit 4a on to a turbine 5 which is connected to a generator 6 for generating electricity. The reactor vessel 1 is arranged inside a containment 7 whereas the turbine 5 is arranged outside thereof.

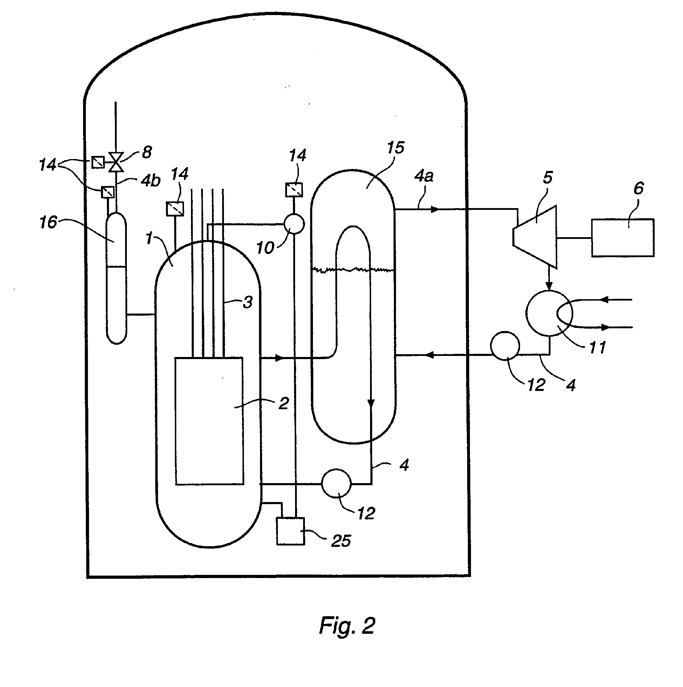

Figure 2 shows a pressurized-water type nuclear power plant. As in boiling-water type nuclear power plants, this plant comprises a reactor vessel 1 with a core 2 of fuel elements which contain nuclear fuel. Further, a number of control rods 3 are arranged insertable from above into the core 2 to control the nuclear fission. A coolant is adapted to flow into the reactor vessel 1 to carry away the heat formed as a result of the nuclear fission. In the pressurized-water reactor, the pressure is considerably higher than in the boiling water reactor. No steam is formed in the pressurized-water reactor. The steam is instead produced with the aid of a steam generator 15. In the same way as in a boiling water nuclear power plant, the steam is then brought further via a tubular conduit 4a to a turbine 5 which is connected to a generator 6. The reactor vessel 1 and the steam generator 15 are arranged in a containment 7 whereas the turbine 5 is arranged outside thereof.

Figure 1 shows that a plurality of valves 8 and a pilot control line 9 are connected to the tubular conduit 4a. Further, a level measurement vessel 10, a condensing device 11 and a pump 12 are connected to the conduit system 4.
Figure 2 shows that a valve 8 is connected to a tubular conduit 4b. Further, two pumps 12, a pressure-maintaining tank 16, a level measurement vessel 10 and a sensor 25 are connected to the conduit system 4. Among other things, in these tubular conduits 4a, 4b, 9, included in the conduit system 4, and in the component parts 8, 10, 11, 12, 16, 25, the gas accumulation spaces which are defined under the background art may arise. To prevent harmful concentrations of non-condensable gases, in particular of hydrogen gas and oxygen gas, from arising in the gas accumulation spaces, a device according to the invention is arranged in the gas accumulation spaces. The device according to the invention is designated by the reference numeral 14.

In both Figures 1 and 2, the valves 8 are arranged to make possible pressure relief of the reactor vessel 1 when shutting off the steam flow to the turbine 5. When restricting the steam flow to the turbine 5, the steam in the tubular conduit 4a in the boiling water reactor according to Figure 1 is passed via a dump line 17 to a condensation pool 18. In the pressurized-water reactor according to Figure 2, the non-radioactive steam is passed in the tubular conduit 4a out into the surrounding atmosphere (not shown).

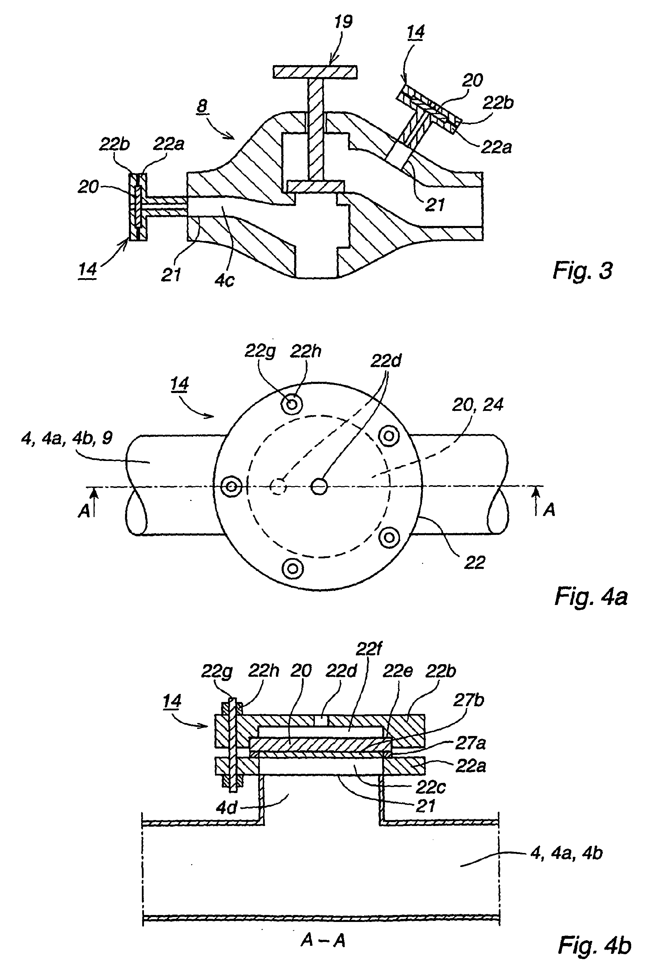

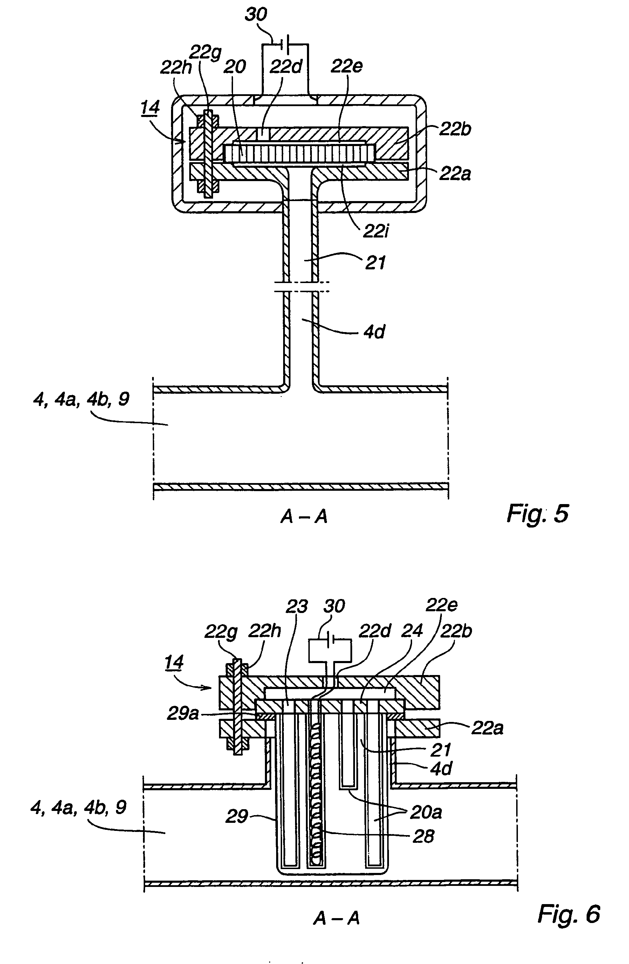

Figure 3 shows a simplified example of a conventional valve 8, for example connected to the tubular conduit 4a, comprising devices 14 for gas extraction. The valve 8 further comprises a valve member 19, arranged in closed position, which is slidable in the axial direction for closing and opening, respectively, of a flow channel 4c. Gases which, at the prevailing pressure and temperature, are non-condensable, may accumulate in the flow channel 4c when a substantially stationary gas mixture is present there. In that case, the flow channel 4c constitutes a gas accumulation space. The wall of the valve 8 is provided with two openings 21. To each of these openings 21, the device 14 comprising a filtering member 20 is mounted. The device 14 chosen in the embodiment is shown in more detail in Figure 5.

Figure 4a shows, in a view from above, the device 14 arranged in a part of the tubular conduit 4a, 4b or 9 in the conduit system 4 comprising a potential gas accumulation space. The device 14 is shown in more detail in Figure 4b where a section A-A in Figure 4a is shown. The device 14 comprises a filtering member in the form of a disc-shaped membrane 20 which is permeable to non-condensable gases, at least hydrogen gas. The membrane 20 is adapted to cover an opening 21 arranged for that purpose in the conduit system 4. The opening 21 is arranged in a part 4d connected to the conduit system 4. The membrane 20 is fixed to the conduit system 4 via a holder 22 comprising a first and a second holder part 22a, 22b.

The first holder part 22a is gas-tightly fixed to the conduit system 4 by means of, for example, welding. The first holder part 22a has an arbitrary geometrical shape and is provided with a first through-hole 22c. The shape of the first holder part 22a corresponds, at least at the connection to the conduit system 4, to the geometrical shape of the edge which surrounds the opening 22. The second holder part 22b also has an arbitrary geometrical shape and is provided with a second through-hole 22d.

In the embodiment, the second hole 22d is arranged with a cross-section area which decreases in the flow direction of the extracted gas. A first recess 22e is made in the second holder part 22b for fixing the membrane 20. The geometrical shape of the recess 22e is preferably adapted to the geometrical shape of the membrane 20 for surrounding the membrane wholly or partly. A second recess 22f is formed downstream of the first recess 22e for collecting the gas, extracted through the membrane 20, before the gas is passed out through the orifice of the second hole 22d which is arranged in a side of the second holder part 22b which is facing away from the first holder part 22a, hereinafter called the outer side. By arranging the downstream part of the second hole 22d with a relatively small cross-section area, the risk of external damage to the membrane 20 is reduced.

The second holder part 22b is fixed to the first holder part with a joint comprising a connecting member 22g, for example a screw and a fixing member 22h, for example a nut.

The membrane 20 is arranged fixed between the first and the second holder part 22a, 22b such that it at least covers an opening, formed by the opening 21 and the respective through-holes 22c and 22d, in the device 14. In an alternative embodiment (not shown), the recess 22e, to wholly or partly surround the membrane 20, is arranged in the first holder part 22a or partly in the first holder part 22a, partly in the second holder part 22b.

To protect the membrane 20 from coatings of various kinds, the membrane may be provided with a protecting part separate from the membrane. In the embodiment of the invention shown in Figure 4b, this additional feature is shown at the reference numerals 27a, 27b. The protecting part 27a is arranged close to the membrane 20 and consists of a perforated or porously sintered metal sheet or a metal netting. The meal sheet or the metal netting consists of, for example, stainless steel. The protecting part 27a is also adapted to reduce the risk that a possible decomposition of the membrane 20 leads to parts thereof accompanying the coolant flow. The protecting part 27a is, for example, surrounded by a sealing member 27b, by means of which it is fixed between the first and second holder parts 22a, 22b. The protecting part 27a is preferably mounted in such a way that it may be replaced or cleaned and mounted again.

Figures 5 shows an embodiment of the invention in which the tubular part 4d associated with the conduit system 4 is narrower and more elongated than that shown in Figure 4b. The embodiment according to Figure 5 comprises, just like the embodiment shown in Figures 4a, 4b, the first and the second holder part 22a, 22b. The difference is that the first hole 21c is extended downstream by a recess 22i. The object of the recess 22i is to make possible collection of the gas which is to be extracted such that the gas is given a possibility of being extracted over as large a surface of the membrane 20 as possible. The second holder part 22b comprises the recess 22e which is adapted to surround the main part of the membrane 20. The second hole 22d is adapted to eccentrically open out into the outer side of the second holder part 22b. The eccentrically placed second hole 22d is also shown in dashed lines in Figure 4a.

In case the temperature in the gas accumulation space is low, that is, of the order of magnitude of 20-150°C, it may be desirable to heat the filtering member to increase its ability to extract the non-condensable gases, in particular the hydrogen. One embodiment of such heating is shown in Figure 5. The embodiment comprises a divisible, heat-conducting container 28 which is arranged surrounding the holder 22. The container 28 is connected to an energy source 30 to achieve electrical heating thereof.

Figure 6 shows an embodiment of the invention in which the filtering member 20 is made as a plurality of tubular membranes 20a which are each permeable to non-condensable gases, at least hydrogen gas. The tubular membranes 20a are each arranged with an opening towards a disc-shaped top plate 24 common to all the tubular members 20a. From the top plate 24, the tubular membranes 20a extend into the potential gas accumulation space with a closed end. In the top plate 24, a plurality of through-holes 23 are arranged, the axial direction of which and the extent in the radial direction of which correspond substantially to the axial direction and the open end of the tubular members 20a. The top plate 24 is mounted to the conduit system 4 by means of a holder 22 in a way corresponding .to that of the membrane 20 shown in Figure 4b. The top plate 24 thus assumes a position in the holder 22 corresponding to that of the membrane 20. The non-condensable gas, extracted through the tubular membranes 20a, is passed to the outer side of the second holder part 22b via the openings 23 and the second hole 22d.

In the same way as the embodiment according to Figure 5, the embodiment according to Figure 6 may be supplemented with a device for heating the filtering member. The embodiment shown in Figure 6 comprises a heat-conducting loop 28 which is arranged inside one of the tubular membranes 20a. In the same way as the embodiment according to Figure 5, the heat-conducting loop 28 is connected to an energy source 30 for achieving electrical heating thereof.

Further, the embodiment according to Figure 6 comprises an additional feature in the form of a protecting part with the same function as the protecting part 27a, 27b described with reference to Figure 4b. The embodiment according to Figure 6 comprises a protecting part in the form of a container 29 which, for example, consists of a perforated or porously sintered metal sheet or a metal netting. The protecting container 29 is arranged to surround the tubular membranes 20a to protect them against coating and to prevent that a possible decomposition thereof results in parts thereof accompanying the coolant. The protecting container 29 is provided with a flange-shaped opening edge 29a, via which it is fixed between the first and second holder parts 22a, 22b in a manner corresponding to that of the top plate 24.

Further, Figure 6 shows a tubular membrane 20a which is considerably shorter than the other ones. The respective lengths of the tubular membranes 20a may be varied optionally in different variations of this embodiment of the invention. The number of tubular membranes 20a may be varied from one to a plurality.

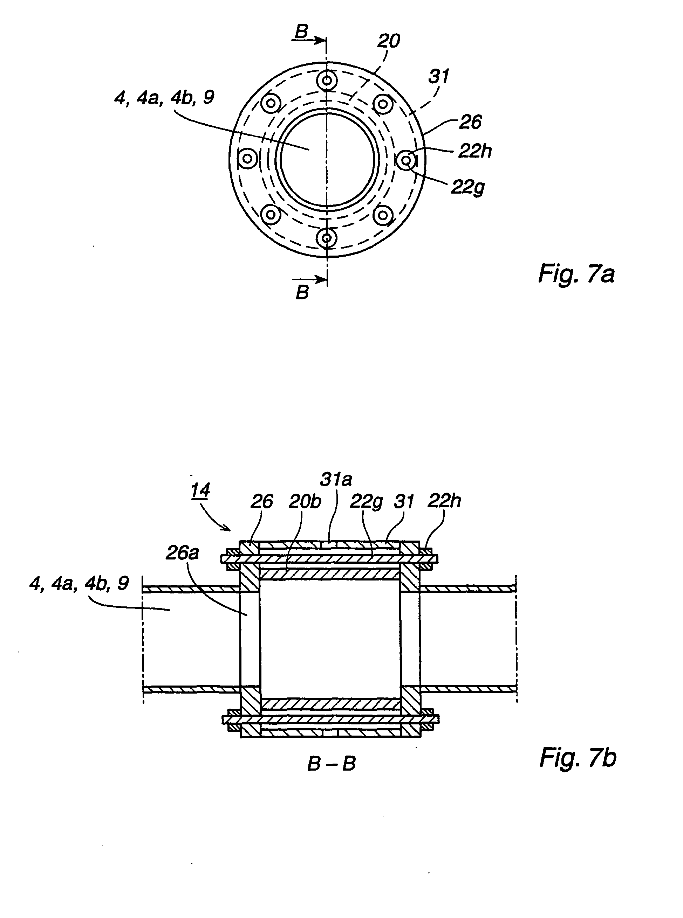

Figure 7a shows, in a view from the side, an additional alternative embodiment of the invention. This embodiment is shown in more detail in Figure 7b which shows a section B-B of Figure 7a. The device 14 comprises a filtering member in the form of an annular membrane 20b which is permeable to non-condensable gases, at least hydrogen gas. The annular membrane 20b is connected in the conduit system 4 between two tubular ends in such a way that it constitutes the walls in the relevant part of the conduit system 4. The annular membrane 20b is arranged clamped via a couple of disc-shaped parts, flanges 26, where a flange 26 is arranged at the respective pipe end, for example by means of welding. The annular membrane 20b is arranged fixed between the flanges 26 by interconnecting the flanges 26 by means of a joint comprising a connecting member 22g, for example a stud bolt, and a fixing member 22h, for example a nut. The respective flanges 26 are designed as discs with an arbitrary cross section and with a through-hole 26a each. The axial direction and the geometrical shape of the hole 26a correspond to the axial direction and hole area, respectively, of the tubular conduit 4a, 4b.

The embodiment shown in Figure 7b is furthermore provided with an annularly shaped protecting part 31 arranged downstream of the annular membrane 20b. The object of the protecting part 30 is to reduce the risk of external damage to the annular membrane 20b. The protecting part 31 is provided with an opening 31a for passing out gas extracted through the annular membrane 20b. The protecting part is, for example, made of stainless steel. The embodiment may, of course, also be provided with a protecting part (not shown), arranged upstream of the annular membrane 20b, with the same function as the protecting part 27a described in Figure 4b or the protecting part 29 described in Figure 6.

The shown embodiments of the device 14 according to the invention are connected, in Figures 4-7, to a gas accumulation space in the form of a tubular conduit 4a, 4b, 9 in the conduit system 4. The embodiments shown in Figures 4b, 5, 6 may, of course, also be associated with valves 8, vessels 1, 7, 14, 16, pipe bends, other parts such as, for example, those designated 10, 11, 12 in Figures 1 and 2 and in other potential gas accumulation spaces. The devices 14 are then mounted to openings 21, intended therefor, arranged in these parts in a corresponding manner as when locating the devices 14 in the valve 8 in Figure 3.

The gas extracted through the filtering member 20, 20a, 20b in the embodiments described above is passed out into the surrounding atmosphere and is thus rendered harmless.

## Claims

1. A nuclear power plant including a boiling water reactor or a pressurised water reactor, the plant comprising:
- a reactor vessel in which a core of fuel elements are contained and which is adapted to receive a coolant flowing through the reactor vessel,
- a conduit system (4) comprising a plurality of tubular conduits (4, 4a, 4b) and component parts connected to the tubular conduits, the conduit system being arranged for transporting the coolant during operation of the reactor, **characterized in that** the plant comprises
- a gas accumulation space (1, 4, 8, 9, 10, 11, 12, 16, 25) formed in the conduit system and adapted to comprise a substantially stationary quantity of gas separated from the coolant, the gas quantity containing hydrogen gas which, at the prevailing pressure and temperature, is non-condensable, a first hydrogen gas partial pressure prevailing in the gas quantity, a second hydrogen gas partial pressure prevailing outside the gas accumulation space, said second hydrogen gas partial pressure being lower than said first hydrogen gas partial pressure, wherein the gas accumulation space (1, 4, 8, 9, 10, 11, 12, 16, 25) has an opening (21), and
a device (14) for extracting hydrogen, the device comprising a filtering member (20, 20a, 20b), which is permeable to the hydrogen gas and which is arranged to cover the opening (21) of the gas accumulation space, wherein the difference between the first and second hydrogen gas partial pressures is adapted to extract the main part of the hydrogen gas through the filtering member (20, 20a, 20b).

2. A plant according to claim 1, **characterized in that** the filtering member is in the form of a disc-shaped membrane (20).

3. A plant according to claim 1, **characterized in that** the filtering member is in the form of one or more tubular membranes (20a) where each of the tubular membranes (20a) comprises an open end and a closed end and where the open end of the tubular member is connected to a corresponding through-hole (23) in a top plate (24) and where the closed end of the tubular membrane is arranged extending in the gas accumulation space.

4. A plant according to any one of claims 1-3, **characterized in that** the filtering member (20, 20a) is connected to the gas accumulation space by means of a holder (22), the holder comprising a first and a second holder part (22a, 22b), the first holder part comprising a first through-hole (22c), the second holder part comprising a second through-hole (22d), the first holder part (22a) being fixed to the gas accumulation space such that the first hole (22c) at least partly overlaps the opening (21), the first holder part being fixed to the second holder part such that the second hole (22d) at least partly overlaps the first hole (22c), the filtering member (20) and the top plate (24), respectively, being arranged between the first and second holder parts (22a, 22b) covering at least the first hole (22c).

5. A plant according to claim 4, **characterized in that** the first and/or the second holder part (22a, 22b) is/are provided with a recess (22e) with an arbitrary geometrical shape, the filtering member (20) and the top plate, respectively, being fixed in the holder (22) by being placed in the recess (22e), and that the second part (22b) is joined to the first part (22a) by means of a joint (22g, 22h).

6. A plant according to claim 2, **characterized in that** the geometrical shape of the recess (22e) corresponds to the geometrical shape of the disc-shaped membrane (20) and the top plate (24), respectively.

7. A plant according to claim 1, **characterized in that** the filtering member is formed as an annular membrane (20b).

8. A plant according to claim 7, **characterized in that** the annular membrane (20b) is arranged fixed between ends of a tubular member (4a, 4b, 9) via a disc-shaped part (26) which is gas-tightly connected to each pipe end and where the disc-shaped parts (26) are interconnected by an interconnecting member (22g, 22h), the disc-shaped parts (26) are each provided with a through-hole (26a), the respective axial direction of which is at least substantially in common with the axial direction of the tubular member, and where the annular membrane (20b), the disc-shaped parts (26) and the tubular member (4a, 4, 9) together form a hollow body which extends in the axial direction.

9. A plant according to claim 3, 4 or 5, **characterized in that** it comprises a heat-conducting loop which is arranged in the tubular member (20a) and where the loop (28) is connected to an energy source (30).

10. A plant according to claim 4 or 5, **characterized in that** it comprises a heat-conducting container (29) which is adapted to surround the holder (22) and where the container (29) is connected to an energy source (30).

11. A plant according to any of the preceding claims, **characterized in that** it comprises a protecting part (27a, 29, 31) arranged upstream and/or downstream of the filtering member (20, 20a, 20b).

## Patentansprüche

1. Kernkraftwerksanlage mit einem Siedewasserreaktor oder einem Druckwasser-Reaktor, wobei die Anlage Folgendes aufweist:
- einen Reaktorbehälter, in welchem ein Kern von Brennelementen enthalten ist und welcher zur Aufnahme eines durch das Reaktorgefäß strömenden Kühlmittels angepasst ist;
- ein Leitungssystem (4), welches eine Vielzahl von rohrförmigen Leitungen (4, 4a, 4b) und Einzelkomponenten aufweist, welche mit den rohrförmigen Leitungen verbunden sind, wobei das Leitungssystem zur Förderung des Kühlmittels bei Betrieb des Reaktors angeordnet ist,
**dadurch gekennzeichnet, dass** die Anlage Folgendes aufweist:
- einen Gasansammlungsraum (1, 4, 8, 9, 10, 11, 12, 16, 25), welcher in dem Leitungssystem gebildet ist und zur Aufnahme einer im Wesentlichen stationären Menge von von dem Kühlmittel getrennten Gas angepasst ist, wobei die Gasmenge Wasserstoffgas enthält, welches bei dem vorherrschenden Druck und bei der vorherrschenden Temperatur nicht kondensierbar ist, wobei ein erster Wasserstoffgas-Partialdruck in der Gasmenge vorherrscht, ein zweiter Wasserstoffgas-Partialdruck außerhalb des Gasansammlungsraums vorherrscht, wobei der zweite Wasserstoffgas-Partialdruck niedriger als der erste Wasserstoffgas-Partialdruck ist, wobei der Gasansammlungsraum (1, 4, 8, 9, 10, 11, 12, 16, 25) eine Öffnung (21) und eine Vorrichtung (14) zur Absaugung von Wasserstoff aufweist, wobei die Vorrichtung ein Filterbauteil (20, 20a, 20b) aufweist, welches für das Wasserstoffgas durchlässig ist und welches zur Abdeckung der Öffnung (21) des Gasansammlungsraums angeordnet ist, wobei die Differenz zwischen dem ersten und zweiten Wasserstoffgas-Partialdruck zur Absaugung des Hauptteils des Wasserstoffgases durch das Filterbauteil (20, 20a, 20b) angepasst ist.

2. Anlage nach Anspruch 1, **dadurch gekennzeichnet, dass** das Filterbauteil in der Gestalt einer scheibenförmigen Membrane (20) ausgebildet ist.

3. Anlage nach Anspruch 1, **dadurch gekennzeichnet, dass** das Filterbauteil in der Gestalt einer oder mehrerer röhrenförmiger Membranen (20a) ausgebildet ist, wobei jede der röhrenförmigen Membranen (20a) ein offenes Ende und ein geschlossenes Ende aufweist, und wobei das offene Ende des röhrenförmigen Bauteils mit einem korrespondierenden Durchgangsloch (23) in einer Deckplatte (24) verbunden ist, und wobei das geschlossene Ende der röhrenförmigen Membrane sich in den Gasansammlungsraum erstreckend angeordnet ist.

4. Anlage nach einem der Ansprüche 1 bis 3, **dadurch gekennzeichnet, dass** das Filterbauteil (20, 20a) mit dem Gasansammlungsraum mittels eines Halters (22) verbunden ist, wobei der Halter ein erstes und zweites Halterteil (22a, 22b) aufweist, wobei das erste Halterteil ein erstes Durchgangsloch (22c) aufweist, wobei das zweite Halterteil ein zweites Durchgangsloch (22d) aufweist, wobei das erste Halterteil (22a) an dem Gasansammlungsraum dergestalt befestigt ist, dass das erste Durchgangsloch (22c) zumindest teilweise die Öffnung (21) überlappt, wobei das erste Halterteil so mit dem zweiten Halterteil befestigt ist, dass das zweite Loch (22d) zumindest teilweise das erste Loch (22c) überlappt, wobei das Filterbauteil (20) und die Deckplatte (24) jeweils zwischen dem ersten und zweiter Halterteil (22a, 22b) angeordnet sind, wobei sie zumindest das erste Loch (22c) abdecken.

5. Anlage nach Anspruch 4, **dadurch gekennzeichnet, dass** das erste und/oder das zweite Halterteil (22a, 22b) mit einer Ausnehmung (22e) mit einer beliebigen geometrischen Gestalt versehen ist/sind, wobei das Filterbauteil (20) und die Deckplatte jeweils in dem Halter (22) durch Anordnung in der Ausnehmung (22e) befestigt sind, und dass das zweite Teil (22b) mit dem ersten Teil (22a) mittels einer Verbindung (22g, 22h) zusammengefügt ist.

6. Anlage nach Anspruch 2, **dadurch gekennzeichnet, dass** die geometrische Gestalt der Ausnehmung (22e) jeweils zu der geometrischen Gestalt der scheibenförmigen Membrane (20) und der Deckplatte (24) korrespondiert.

7. Anlage nach Anspruch 1, **dadurch gekennzeichnet, dass** das Filterbauteil als eine ringförmige Membrane (20b) ausgebildet ist.

8. Anlage nach Anspruch 7, **dadurch gekennzeichnet, dass** die ringförmige Membrane (20b) zwischen Enden eines röhrenförmigen Bauteils (4a, 4b, 9) über ein scheibenförmiges Teil (26) befestigt angeordnet ist, welches mit jedem Rohrende gasdicht verbunden ist, und wobei die scheibenförmigen Teile (26) mit einem Verbindungsbauteil (22g, 22h) miteinander verbunden sind, wobei jedes der scheibenförmigen Teile (26) mit einem Durchgangsloch (26a) versehen ist, dessen jeweilige axiale Richtung zumindest im Wesentlichen gemeinsam mit der axialen Richtung des röhrenförmigen Bauteils verläuft, und wobei die ringförmige Membrane (20b), die scheibenförmigen Teile (26) und das röhrenförmige Bauteil (4a, 4, 9) zusammen einen Hohlkörper bilden, welcher sich in der axialen Richtung erstreckt.

9. Anlage nach Anspruch 3, 4 oder 5, **dadurch gekennzeichnet, dass** sie eine Wärme leitende Schleife aufweist, welche in dem röhrenförmigen Bauteil (20a) angeordnet ist, und wobei die Schleife (28) mit einer Energiequelle (30) verbunden ist.

10. Anlage nach Anspruch 4 oder 5, **dadurch gekennzeichnet, dass** sie einen Wärme leitenden Behälter (29) aufweist, welcher zur Ummantelung des Halters (22) angepasst ist, und wobei der Behälter (29) mit einer Energiequelle (30) verbunden ist.

11. Anlage nach einem der vorhergehenden Ansprüche, **dadurch gekennzeichnet, dass** sie ein Schutzbauteil (27a, 29, 31) aufweist, welches stromaufwärts und/oder stromabwärts von dem Filterbauteil (20, 20a, 20b) angeordnet ist.

## Revendications

1. Centrale nucléaire comprenant un réacteur à eau bouillante ou un réacteur à eau pressurisée, la centrale comprenant :
- un récipient de réacteur dans lequel est contenu un noyau d'éléments de combustible et qui est apte à recevoir un réfrigérant s'écoulant à travers le récipient de réacteur,
- un système de conduites (4) comprenant une pluralité de conduites tubulaires (4, 4a, 4b) et des parties composantes raccordées aux conduites tubulaires, le système de conduites étant apte à acheminer le réfrigérant pendant le fonctionnement du réacteur,
**caractérisée en ce que** la centrale comprend
- un espace d'accumulation de gaz (1, 4, 8, 9, 10, 11, 12, 16, 25) formé dans le système de conduites et apte à comprendre une quantité sensiblement stationnaire de gaz séparé du réfrigérant, la quantité de gaz contenant du gaz hydrogène qui n'est pas condensable à la température et à la pression qui règnent, une première pression partielle de gaz hydrogène régnant dans la quantité de gaz, une seconde pression partielle de gaz hydrogène régnant à l'extérieur de l'espace d'accumulation de gaz, ladite seconde pression partielle de gaz hydrogène étant inférieure à ladite première pression partielle de gaz hydrogène, dans laquelle l'espace d'accumulation de gaz (1, 4, 8, 9, 10, 11, 12, 16, 25) présente une ouverture (21), et
un dispositif (14) pour extraire l'hydrogène, le dispositif comprenant un élément filtrant (20, 20a, 20b) qui est perméable au gaz hydrogène et qui est apte à recouvrir l'ouverture (21) de l'espace d'accumulation de gaz, dans laquelle la différence entre les première et seconde pressions partielles de gaz hydrogène est apte à extraire la partie principale de gaz hydrogène à travers l'élément filtrant (20, 20a, 20b).

2. Centrale selon la revendication 1, **caractérisée en ce que** l'élément filtrant se présente sous la forme d'une membrane discoïde (20).

3. Centrale selon la revendication 1, **caractérisée en ce que** l'élément filtrant se présente sous la forme d'une ou plusieurs membranes tubulaires (20a) où chacune des membranes tubulaires (20a) comprend une extrémité ouverte et une extrémité fermée et où l'extrémité ouverte de l'élément tubulaire est raccordée à un trou traversant (23) correspondant dans une plaque supérieure (24) et où l'extrémité fermée de la membrane tubulaire est apte à s'étendre dans l'espace d'accumulation de gaz.

4. Centrale selon l'une quelconque des revendications 1-3, **caractérisée en ce que** l'élément filtrant (20, 20a) est raccordé à l'espace d'accumulation de gaz au moyen d'un support (22), le support comprenant une première et une seconde partie de support (22a, 22b), la première partie de support comprenant un premier trou traversant (22c), la seconde partie de support comprenant un second trou traversant (22d), la première partie de support (22a) étant fixée sur l'espace d'accumulation de gaz, de telle sorte que le premier trou (22c) chevauche au moins partiellement l'ouverture (21), la première partie de support étant fixée sur la seconde partie de support de telle sorte que le second trou (22d) chevauche au moins partiellement le premier trou (22c), l'élément filtrant (20) et la plaque supérieure (24) respectivement étant disposés entre les première et seconde parties de support (22a, 22b) recouvrant au moins le premier trou (22c).

5. Centrale selon la revendication 4, **caractérisée en ce que** la première et/ou la seconde partie de support (22a, 22b) est/sont dotée(s) d'un évidement (22e) avec une forme géométrique arbitraire, l'élément filtrant (20) et la plaque supérieure, respectivement, étant fixés dans le support (22) en étant placés dans l'évidement (22e), et **en ce que** la seconde partie (22b) est reliée à la première partie (22a) au moyen d'une articulation (22g, 22h).

6. Centrale selon la revendication 2, **caractérisée en ce que** la forme géométrique de l'évidement (22e) correspond respectivement à la forme géométrique de la membrane discoïde (20) et de la plaque supérieure (24).

7. Centrale selon la revendication 1, **caractérisée en ce que** l'élément filtrant se présente sous la forme d'une membrane annulaire (20b).

8. Centrale selon la revendication 7, **caractérisée en ce que** la membrane annulaire (20b) est disposée de façon fixe entre les extrémités d'un élément tubulaire (4a, 4b, 9) par l'intermédiaire d'une partie en forme de disque (26) qui est raccordée de façon étanche au gaz à chaque extrémité de conduite et où les parties discoïdes (26) sont reliées entre elles par un élément d'interconnexion (22g, 22h), les parties discoïdes (26) sont chacune dotées d'un trou traversant (26a) dont la direction axiale respective est au moins sensiblement commune avec la direction axiale de l'élément tubulaire, et où la membrane annulaire (20b), les parties discoïdes (26) et l'élément tubulaire (4a, 4, 9) forment conjointement un corps creux qui s'étend dans la direction axiale.

9. Centrale selon la revendication 3, 4 ou 5, **caractérisée en ce qu'**elle comprend une boucle conductrice de chaleur qui est disposée dans l'élément tubulaire (20a) et où la boucle (28) est raccordée à une source d'énergie (30).

10. Centrale selon la revendication 4 ou 5, **caractérisée en ce qu'**elle comprend un conteneur conducteur de chaleur (29) qui est apte à entourer le support (22) et où le conteneur (29) est raccordé à une source d'énergie (30).

11. Centrale selon l'une quelconque des revendications précédentes, **caractérisée en ce qu'**elle comprend une partie de protection (27a, 29, 31) disposée en amont et/ou en aval de l'élément filtrant (20, 20a, 20b).
